(19) Europäisches Patentamt

European Patent Office

Office européen des brevets

(11) **EP 1 723 201 B1**

(12) **EUROPEAN PATENT SPECIFICATION**

(45) Date of publication and mention
of the grant of the patent:
**03.10.2018 Bulletin 2018/40**

(21) Application number: **05714071.7**

(22) Date of filing: **28.02.2005**

(51) Int Cl.:
**C08L 83/04** (2006.01)   **C09K 3/10** (2006.01)

(86) International application number:
**PCT/US2005/006049**

(87) International publication number:
**WO 2005/085356 (15.09.2005 Gazette 2005/37)**

(54) **RTV SILICONE COMPOSITION OFFERING RAPID BOND STRENGTH**

RTV-SILIKONZUSAMMENSETZUNG MIT SCHNELLER VERBINDUNGSFESTIGKEIT

COMPOSITION DE SILICONE VULCANISABLE A TEMPERATURE AMBIANTE PRESENTANT UNE RESISTANCE DE LIAISON RAPIDE

(84) Designated Contracting States:
**CH DE IT LI**

(30) Priority: **01.03.2004 US 548969 P**
**26.10.2004 US 973723**

(43) Date of publication of application:
**22.11.2006 Bulletin 2006/47**

(60) Divisional application:
**10012483.3 / 2 275 492**

(73) Proprietor: **Momentive Performance Materials Inc.**
**Waterford, NY 12188 (US)**

(72) Inventors:
• **WILLIAMS, David, A.**
**Ganesvoort, NY 12831 (US)**

• **CORREIA, Reuben**
**Watervliet, NY 12189 (US)**
• **LUCAS, Gary, Morgan**
**Glenville, NY 12302 (US)**

(74) Representative: **Herrmann, Uwe et al**
**Lorenz Seidler Gossel**
**Rechtsanwälte Patentanwälte**
**Partnerschaft mbB**
**Widenmayerstraße 23**
**80538 München (DE)**

(56) References cited:
**EP-A- 0 861 876    WO-A-00/37565**
**US-A- 3 334 067    US-A- 5 969 057**

**Description**

BACKGROUND OF THE INVENTION

Moisture curable compositions are well known for their use as sealants. Moisture curable compositions require a significant amount of time, commonly several days, in which to fully cure before reaching maximum strength. In certain applications that utilize sealant in assembly line applications (e.g. window assembly), it is desirable to use a sealant that can rapidly develop green strength.

US 5,969,057 A and EP 0 861 876 A disclose room temperature vulcanizable silicone compositions, the latter also such compositions for use in bending substates such as glass and metals.

BRIEF DESCRIPTION OF THE INVENTION

The present invention provides for a sealant composition as defined in claim 1.

The present invention further provides for a manufacturing process for manufacturing architectural elements said architectural elements comprising the sealant of claim 1 said sealant having a green strength between about 1 psi and about 75 psi after a period of time ranging from about 1 mins. to about 40 minutes, wherein said manufacturing process produces said architectural elements at a rate faster than a similar process using a sealant having a green strength of 0 psi after 60 mins.

DESCRIPTION OF THE INVENTION

We now disclose sealant compositions that rapidly develop green strength. These compositions have as an advantage allowing the sealant user to handle, package and ship the assembled construction after shorter cure times without deleterious effect to the assembled construction, thus increasing production line speed and lowering product inventory. The term "green strength" as defined herein means a high modulus skin of sufficient strength that elements of a construction can be formed and will maintain the desired configuration even if handled, packaged, and shipped after relatively short times, without showing permanent deformation.

The present invention is comprised of a 2-part room temperature vulcanizing (RTV) silicone composition curable in the presence of moisture. A general description of each of the components of the 2-part formulation are given as follows:

  (a) a diorganopolysiloxane wherein the silicon atom at each polymer chain end is silanol terminated; whereby the viscosity of the siloxane is preferably about 1,000 to 200,000 cps at 25°C;

  (b) a diorganopolysiloxane wherein the silicon atom at each polymer chain end is alkyl terminated; whereby the viscosity of the siloxane is preferably about 1,000 to 200,000 cps at 25°C;

  (c) an alkylsilicate (cross-linker);

  (d) a condensation catalyst comprising organotin compounds being preferred and more specifically dibutyltin dilaurate being preferred

  (e) an alkoxysilane adhesion promoter;

  (f) an optional reinforcing filler (use of more than 1 filler is common);

  (g) an optional non-ionic surfactant selected.

More specifically, the "A or first component" of the 2-part formulation comprises (a), (b) and, usually, (f), and (g). Additionally, the "B or second component" comprises (b), (c), (d), (e), and, usually, (f). The ratio of "component A" to "component B" is adjusted to provide optimal performance properties and is approximately 13 to 1 by weight.

The compositions of the present invention may be prepared using other ingredients that are conventionally employed in RTV silicone compositions such as colorants, pigments and plasticizers, as long as they do not interfere with the desired properties.

The level of incorporation of the diorganopolysiloxane wherein the silicon atom at each polymer chain end is silanol terminated (a) ranges from 5 weight % to 80 weight %, more preferably from about 15 weight % to about 60 weight %, and most preferably from about 35 weight % to about 45 weight % of the total composition. The silanol terminated diorganopolysiloxane preferably has the formula:

$$M_a D_b D'_c$$

with the subscript a = 2 and b equal to or greater than 1 and with the subscript c zero or positive where

$$M = (HO)_{3-x-y}R^1{}_xR^2{}_ySiO_{1/2};$$

with the subscript x = 0, 1 or 2 and the subscript y is either 0 or 1, subject to the limitation that x + y is less than or equal to 2, where $R^1$ and $R^2$ are independently chosen monovalent C1 to C60 hydrocarbon radicals; where

$$D = R^3R^4SiO_{1/2};$$

where $R^3$ and $R^4$ are independently chosen monovalent C1 to C60 hydrocarbon radicals; where

$$D' = R^5R^6SiO_{2/2};$$

where $R^5$ and $R^6$ are independently chosen monovalent C1 to C60 hydrocarbon radicals.

The level of incorporation of the diorganopolysiloxane wherein the silicon atom at each polymer chain end is alkyl terminated (b) ranges from 5 weight % to 35 weight %, more preferably from about 5 weight % to about 25 weight %, and most preferably from about 8 weight % to about 20 weight % of the total composition. The alkyl terminated diorganopolysiloxane preferably has the formula:

$$M''_e D''_f D'''_g$$

with the subscript e = 2 and f equal to or greater than 1 and with the subscript g zero or positive where

$$M'' = R^7R^8R^9SiO_{1/2};$$

where $R^7$, $R^8$ and $R^9$ are independently chosen monovalent C1 to C60 hydrocarbon radicals; where

$$D'' = R^{10}R^{11}SiO_{2/2};$$

where $R^{10}$ and $R^{11}$ are independently chosen monovalent C1 to C60 hydrocarbon radicals; where

$$D''' = R^{12}R^{13}SiO_{2/2};$$

where $R^{12}$ and $R^{13}$ are independently chosen monovalent C1 to C60 hydrocarbon radicals.

The level of incorporation of the alkylsilicate (crosslinker, c) ranges from 0.1 weight % to 10 weight %, more preferably from about 0.3 weight % to about 5 weight %, and most preferably from about 0.5 weight % to about 1.5 weight % of the total composition. The alkylsilicate preferably has the formula:

$$(R^{14}O)(R^{15}O)(R^{16}O)(R^{17}O)Si$$

where $R^{14}$, $R^{15}$, $R^{16}$ and $R^{17}$ are independently chosen monovalent C1 to C60 hydrocarbon radicals.

The RTV silicone composition of the present invention also comprises a condensation catalyst (d). The condensation catalyst can be any of those known to be useful for facilitating crosslinking in silicone sealant compositions. The condensation catalyst may include metal and non-metal catalysts. Examples of the metal portion of the metal condensation catalysts useful in the present invention include tin, titanium, zirconium, lead, iron cobalt, antimony, manganese, bismuth and zinc compounds.

The tin compounds useful for facilitating crosslinking in silicone sealant compositions include: tin compounds such as dibutyltindilaurate, dibutyltindiacetate, dibutyltindimethoxide, tinoctoate, isobutyltintriceroate, dibutyltinoxide, dibutyltin bis-diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate. In one embodiment, tin compounds and $(C_8H_{17})_2SnO$ dissolved in $(n-C_3H_9O)_4Si$ are used. In another embodiment, diorganotin bis $\beta$-diketonates are used. Other examples of tin compounds may be found in US 5,213,899, US 4,554,338, US 4,956,436, and US 5,489,479. In yet another embodiment, chelated titanium compounds, for example, 1,3-propanedioxytitanium bis(ethylacetoacetate); di-isopropoxytitanium bis(ethylacetoacetate); and tetra-alkyl titanates, for example, tetra n-butyl titanate and tetra-isopropyl titanate, are used.

It is preferred that the condensation catalyst of the present invention is a metal catalyst. The preferred metal condensation catalyst is selected from the group consisting of tin compounds with dibutyltindilaurate being preferred.

The level of incorporation of the condensation catalyst, component (d), ranges from 0.001 weight % to 1 weight %, more preferably fro about 0.003 weight % to about 0.5 weight %, and most preferably from about 0.005 weight % to about 0.1 weight % of the total composition.

The RTV silicone compositions of the present invention also comprise an alkoxysilane or blend of alkoxysilanes as an adhesion promoter, the preferred combination being a blend of n-2-aminoethyl-3-aminopropyltrimethoxysilane and 1,3,5-tris(trimethoxysilylpropyl)isocyanurate. Other adhesion promoters useful in the present invention are: n-2-aminoethyl-3-aminopropyltriethoxysilane, γ-aminopropyltriethoxysilane, γ-aminopropyltrimethoxysilane, aminopropyltrimethoxysilane, *bis*-γ-trimethoxysilypropyl)amine, N-Phenyl-γ-aminopropyltriniethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, and n-ethyl-3-trimethoxysilyl-2-methylpropanamine.

The level of incorporation of the alkoxysilane (adhesion promoter, e) ranges from 0.1 weight % to 20 weight %, more preferably from about 0.3 weight % to about 10 weight %, and most preferably from about 0.5 weight % to about 2 weight % of the total composition.

The RTV (room temperature vulcanizable) silicone compositions of the present invention may also comprise a filler. The fillers useful in the present invention is a filler or mixture of fillers that is selected from those known to be useful in RTV silicone sealants. The fillers include ground, precipitated and colloidal calcium carbonates which is treated with compounds such as stearate or stearic acid; reinforcing silicas such as fumed silicas, precipitated silicas, silica gels and hydrophobized silicas and silica gels; crushed and ground quartz, alumina, aluminum hydroxide, titanium hydroxide, diatomaceous earth, iron oxide, carbon black and graphite or clays such as kaolin, bentonite or montmorillonite for example.

Preferably, the filler is a calcium carbonate filler, silica filler or a mixture thereof. The type and amount of filler added depends upon the desired physical properties for the cured RTV silicone composition. The amount of filler useful in the present invention is from about 5 weight % to about 80 weight %, more preferably from about 20 weight % to about 60 weight %, and most preferably from about 37 weight % to about 49 weight % of the total composition. The filler may be a single species or a mixture of two or more species.

Optional component (g) comprises a non-ionic surfactant compound selected from the group of surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers), copolymers of silicones and copolymers of ethylene oxide and propylene oxide and mixtures thereof in an amount ranging from slightly above 0 weight % to about 10 weight %, more preferably from about 0.1 weight % to about 5 weight %, and most preferably from about 0.5 weight % to about 0.75 weight % of the total composition. The use of silicone polyether as a non-ionic surfactant is described in US 5,744,703.

Furthermore, these compositions can be prepared using either batch or continuous modes of manufacture. Preferably, the ingredients such as silicone polymer, reinforcing filler, cure catalyst, adhesion promoter, plasticizers, process aids, and other additives are combined in a continuous compounding extruder to produce the desired sealant composition. Both the "A component" and the "B component" are prepared in this manner. The continuous compounding extruder can be any continuous compounding extruder such as the twin screw Werner-Pfleiderer extruder, or a Buss, or P.B. Kokneader extruder.

In the broadest conception of the present invention, all the ingredients may be mixed in the continuous compounding extruder, that is silanol polymer, filler, plasticizer, a condensation catalyst and an adhesion promoter, etc. In such a process, which is continuous, the extruder is operated at a range of 40° to 100° C., but more preferably in the range of 50° to 80° C and the extruder is operated at a partial vacuum so as to remove volatiles during the mixing process.

As used herein the term architectural element denotes a prefabricated or manufactured unit useful or used in construction comprising glazing and caulking or adhesive to bond the glazing to structural elements comprising the architectural element. As used herein the term glazing has its ordinary meaning, a meaning that is inclusive of glass and glass substitutes such as polyacrylates, specifically polymethylmethacrylate and polycarbonates and the like including but not limited to the transparent, translucent and opaque varieties of glazing. As used herein the term caulking or adhesive encompasses or comprises the silicone compositions of the present invention. As used herein structural elements are materials used for the construction of buildings, e.g. wood, stone, brick, steel, aluminum, brass, iron, copper, concrete, plastic, plastic covered wood or metal and the like. A non-limiting list of exemplary architectural elements comprises among others: doors containing one or more windows, prefabricated windows, sliding doors with one or more windows, folding doors with one or more windows, curtainwall, shop glazing, structural glazing and the like.

The compositions of the present invention are curable compositions that rapidly develop a green strength after curing for a period of time. These compositions develop a green strength ranging from about 1 psi to about 75 psi as measured by WPSTM test C-1221 after curing for a time period ranging from about 1 minute to about 60 minutes, preferably these compositions develop a green strength ranging from about 1 psi to about 45 psi as measured by WPSTM test C-1221 after curing for a time period ranging from about 1 minute to about 60 minutes, more preferably these compositions develop a green strength ranging from about 1 psi to about 35 psi as measured by WPSTM test C-1221 after curing for a time period ranging from about 1 minute to about 60 minutes, and most preferably these compositions develop a green strength ranging from about 1 psi to about 25 psi as measured by WPSTM test C-1221 after curing for a time period ranging from about 1 minute to about 60 minutes. The curing time period for measurement of green strength may range from about 1 minute to about 60 minutes, preferably for a time period ranging from about 1 minute to about 45 minutes, more preferably for a time period ranging from about 1 minute to about 30 minutes, and most preferably for a time period ranging from about 1 minute to about 15 minutes.

EXPERIMENTAL

The following examples were prepared using the above continuous compounding process and are illustrative of the present invention.

Example 1:

This experiment demonstrates the rapid strength build offered by the sealants of the present invention with a typical commercial 1-part window bedding sealant. As 1-part sealants are well known to only slowly build strength, initial measurements were taken only after the sealant was allowed to cure for 24 hrs. The following data was generated using lap shear adhesion as measured by WPSTM test C-1221. In all instances, the lap shear adhesion data was generated using test panels comprising wood and glass substrates. The panels were prepared using 1 inch coupons overlapping ½ inch using 1/16 inch of sealant in a wood to glass configuration. The samples were cured under 50%RH and 73F.

Table 1: Comparison of strength build of experimental 2-part sealant versus commercial 1-part

| Time (days) | 2-part formulation (psi) | 1-part formulation (psi) |
|---|---|---|
| 1 | 106 | 34 |
| 2 | 110 | 34 |
| 6 | 104 | 60 |
| 10 | 104 | 101 |

Table 2: Comparison of strength build of experimental 2-part sealant versus commercial 1-part

| | Adhesion | Strength (psi) |
|---|---|---|
| | 2-part | 1-part |
| Time | RapidStrength™ | SCS2511T |
| 15 min | 21 | * |
| 30 min | 31 | * |
| 1 hr | 49 | * |
| 3 hrs | 81 | * |
| 6 hrs | 102 | 25 |
| 24 hrs | 129 | 50 |
| 3 days | 122 | 52 |
| 7 days | 111 | 83 |

(continued)

|  | Adhesion | Strength (psi) |
|---|---|---|
|  | 2-part | 1-part |
| Time | RapidStrength™ | SCS2511T |
| 14 days | 127 | 96 |
| Note: * denotes uncured ("wet") sealant with no measurable strength | | |

Example 2:

This experiment is designed to demonstrate the rapid strength build of the primed and primerless versions of the experimental sealants of the present invention. As described in example 2, the strength measurements of data were obtained using lap shear test specimens comprising vinyl to glass test panels.

Table 3: Comparison of strength build of experimental 2-part sealant formulations

| Time | Formulation 1 (with primer) | | Formulation 2 (without primer) | |
|---|---|---|---|---|
|  | Wood (psi) | Vinyl (psi) | Wood (psi) | Vinyl (psi) |
| 20 min. | 14 | 7 | 21 | 9 |
| 40 min. | 37 | 46 | 49 | 15 |
| 60 min. | 58 | 88 | 78 | 23 |
| 180 min. | 70 | 96 | 109 | 118 |
| 360 min. | 76 | 138 | 134 | 88 |
| 1 day | 193 | 197 | 133 | 139 |
| 3 days | 179 | 193 | 155 | 171 |
| 7 days | 163 | 148 | 172 | 141 |

As shown in the above data (Table 3), these formulations demonstrate excellent strength build between wood and glass, as well as vinyl (plastic) and glass.

Ingredients:

Polymer 1: a mixture of polydimethylsiloxanes endblocked with hydroxyl groups and having an overall viscosity of approximately 10,000 cps comprising polymers described by the formula

Precipitated Calcium Carbonate: a precipitated stearic acid treated calcium carbonate and having a particle size of approximately 0.07 microns.

Plasticizer: polydimethylsiloxanes endblocked with trimethylsilyl groups and having a viscosity of approximately 100 cps.

Rheology Additive: polyalkyleneoxide modified organosilicone co-polymer having a viscosity of about 100 to about 3000centipoise at 25C.

Polymer 2: polydimethylsiloxanes endblocked with trimethylsilyl groups and having a viscosity of approximately 10,000 cps.

Treated Silica: an octamethylcyclotetrasiloxane treated fumed silica filler with a surface area of approximately 200 $\pm$ 20 $m^2/g$.

Pigment: a dispersion of approximately 50% by weight carbon black in polydimethylsiloxanes endblocked with trimethylsilyl groups

Adhesion Promoter 1: aminoethylaminopropyltrimethoxysilane

Adhesion Promoter 2: tris-trimethoxysilylpropylisocyanurate

NPS: tetra-N-propylsilicate

DBTDL: Dibutyltin dilaurate

Table 4: Examples of experimental compositions

|  | Formulation 1 | Formulation 2 |
|---|---|---|
| Ingredients (weight %) |  |  |
| Part 1 |  |  |
| Polymer 1 | 42.8 | 42.8 |
| Ppt. Calcium Carbonate | 45.0 | 45.0 |
| Plasticizer | 11.5 | 11.5 |
| Rheology Additive | 0.7 | 0.7 |
|  |  |  |
|  |  |  |
| Part 2 |  |  |
| Polymer 2 | 59.76 | 55.61 |
| Treated Silica | 11.6 | 10.6 |
| Pigment | 0.74 | 0.74 |
| Adhesion Promoter 1 | 15.8 | 15.9 |
| Adhesion Promoter 2 | - | 4.0 |
| NPS | 11.63 | 12.83 |
| DBTDL | 0.47 | 0.32 |

GREEN STRENGTH MEASUREMENT BY LAP SHEAR

Green strength was measured by the following procedure:
The surfaces of all substrates (glass, vinyl, wood, etc) were cleaned prior to preparation of the lap shear test coupon. Glass and vinyl substrates were cleaned using a soap (Ajax®. Dish Liquid) and water solution. After cleaning, the surfaces of the substrates were immediately wiped dry with a clean Kimwipe®. The wood substrates were wiped using a dry Kimwipe®.
The test specimens measuring I inch by 3 inches, were prepared using a jig assembly in order to ensure the reproducibility of the bond line thickness (1/16 of an inch) and overlap (0.50 inches) of the lap shear test specimen. The test specimens were cured under standard conditions 25° C and 50% relative humidity (RH) for the time specified. Performance measurements were obtained using a standard tensile tester. Each test specimen was pulled (at a crosshead speed of 0.5 in. per minute) to failure. The lap shear strength (psi) was calculated in accordance with the following formula:

$$\text{Lap Shear Strength (psi)} = \frac{\text{Peak load (lb.)}}{\text{Bonded Area (sq. in.)}}$$

**Claims**

1. A curable two part sealant composition comprising a first component (A) and a second component (B):

    wherein the sealant composition is a two-part room temperature vulcanizing silicone composition curable in the presence of moisture; said first component (A) comprising:

    (a) a diorganopolysiloxane in an amount ranging from 5 weight percent to 80 weight percent of the total composition wherein the silicon atom at each polymer chain end is silanol terminated;
    (b) diorganopolysiloxane in an amount ranging from 5 weight percent to 35 weight percent of the total composition wherein the silicon atom at each polymer chain end is alkyl terminated;

    said second component (B) comprising:

    (b) diorganopolysiloxane in an amount ranging from 5 weight percent to 35 weight percent of the total composition wherein the silicon atom at each polymer chain end is alkyl terminated;
    (c) an alkylsilicate in an amount ranging from 0.1 weight percent to 10 weight percent of the total composition;
    (d) a condensation catalyst in an amount ranging from 0.001 weight percent to 1 weight percent of the total composition; and
    (e) an alkoxysilane adhesion promoter in an amount ranging from 0.1 weight percent to 20 weight percent of the total composition;

    wherein the weight ratio of first component (A) to second component (B) is approximately 13 to 1; and,
    wherein said sealant composition has a green strength of from 6,895 kPa [1 psi] to 517,1 kPa [75 psi] as measured by WPSTM test C-1221 after curing for a time period of from 1 minute to 60 minutes.

2. The sealant composition of claim 1 wherein said first and second components (A; B) further comprise (f) a reinforcing filler selected from the group consisting of ground calcium carbonate, precipitated calcium carbonate, colloidal calcium carbonate, calcium carbonate treated with compounds stearate or stearic acid; fumed silica, precipitated silica, silica gels, d hydrophobized silicas, hydrophilic silica gels; crushed quartz, ground quartz, alumina, aluminum hydroxide, titanium hydroxide, clay, kaolin, bentonite montmorillonite, diatomaceous earth, iron oxide, carbon black and graphite and mixtures thereof in an amount ranging from 1 weight percent to 80 weight percent of the total composition.

3. The sealant composition of claim 1 or claim 2 wherein said first component (A) further comprising a non-ionic surfactant selected from the group of surfactants consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof in an amount ranging from 0.1 weight percent to 10 weight percent of the total composition.

4. The sealant composition of claim 3 further wherein the non-ionic surfactant selected from the group of surfactants consisting of copolymers of ethylene oxide and propylene oxide, copolymers of silicones and polyethers, copolymers of silicones and copolymers of ethylene oxide and propylene oxide and mixtures thereof.

5. The sealant composition of claim 4 wherein the amount of the silanol terminated diorganopolysiloxane, component (a), ranges from in amount from 35 weight % to 45 weight % of the total composition.

6. The sealant composition of claim 5 wherein the amount of the alkyl terminated diorganopolysiloxane, component (b), ranges in amount from 8 weight % to 20 weight % of the total composition.

7. The sealant composition of claim 6 wherein the amount of the alkyl silicate, component (c), ranges in amount from 0.5 weight % to 1.5 weight % of the total composition.

8. The sealant composition of claim 7 wherein the amount of condensation catalyst, component (d), ranges in amount from 0.005 weight % to 0.1 weight % of the total composition.

9. The sealant composition of claim 8 wherein the amount of reinforcing filler, component (f), ranges in amount from 37 weight % to 49 weight % of the total composition.

**10.** The sealant composition of claim 9 wherein the amount of alkoxysilane adhesion promoter, component (e), ranges in amount from 0.5 weight percent to 2 weight percent of the total composition.

**11.** A manufacturing process for manufacturing architectural elements having a rate of manufacture of said architectural elements, said architectural elements comprising a curable two part sealant composition as defined in any preceding claim, wherein said manufacturing process produces said architectural elements at a rate of manufacture faster than a similar manufacturing process using a sealant having a green strength of 0 psi after 60 minutes.

**12.** An architectural element comprising and formed with the cured composition of any one of claims 1 to 10 and/or manufactured by the process of claim 11.

**13.** The architectural element of claim 12 wherein said architectural element is a window, a door, structural glazing or curtainwall.

**14.** The sealant composition of any of claims 1-10, wherein said first component (A) comprises (a) 15 to 60 weight% of the diorganopolysiloxane wherein the silicon atom at each polymer chain end is silanol terminated; and (b) a filler; and said second component (B) comprises (c) 0.3 to 5.0 weight% of the alkylsilicate; (d) 0.001 to 1.0 weight % of the condensation catalyst; (e) 0.3 to 10 weight percent of the adhesion promoter selected from the group consisting of N-2-aminoethyl-3-aminopropyltriethoxysilane, γ-aminopropyltriethoxysilane, γ-aminopropyltrimethoxysilane, aminopropyltrimethoxysilane, bis-γ-trimethoxysilypropyl)amine, N-Phenyl-γ-aminopropyltrimethoxysilane, γ-aminopropylmethyldiethoxysilane, γ-aminopropylmethyldiethoxysilane, methylaminopropyltrimethoxysilane, 4-amino-3,3,-dimethylbutyltrimethoxysilane, and N-ethyl-3-trimethoxysilyl-2-methylpropanamine; and (f) a filler.

**Patentansprüche**

**1.** Härtbare, zweiteilige Dichtmittelzusammensetzung umfassend eine erste Komponente (A) und eine zweite Komponente (B):

wobei die Dichtmittelzusammensetzung eine zweiteilige, bei Raumtemperatur vulkanisierende Silikonzusammensetzung ist, die in Anwesenheit von Feuchtigkeit härtbar ist; wobei diese erste Komponente (A) aufweist:

(a) ein Diorganopolysiloxan in einer Menge von 5 Gew.-% bis 80 Gew.-% der Gesamtzusammensetzung, wobei das Silikonatom an jedem Ende der Polymerkette Silanol-terminiert ist;
(b) Diorganopolysiloxan in einer Menge von 5 Gew.-% bis 35 Gew.-% der Gesamtzusammensetzung, wobei das Silikonatom an jedem Ende der Polymerkette Alkyl-termininert ist;

wobei diese zweite Komponente (B) aufweist:

(b) Diorganopolysiloxan in einer Menge von 5 Gew.-% bis 35 Gew.-% der Gesamtzusammensetzung, wobei das Silikonatom an jedem Ende der Polymerkette Alkyl-termininert ist;
(c) ein Alkylsilikat in einer Menge von 0,1 Gew.-% bis 10 Gew.-% der Gesamtzusammensetzung;
(d) einen Kondensationskatalysator in einer Menge von 0,001 Gew.-% bis 1 Gew.-% der Gesamtzusammensetzung; und
(e) einen Alkoxysilan-Haftvermittler in einer Menge von 0,1 Gew.-% bis 20 Gew.-% der Gesamtzusammensetzung;

wobei das Gewichtsverhältnis der ersten Komponente (A) zur zweiten Komponente (B) etwa 13:1 beträgt; und, wobei diese Dichtmittelzusammensetzung eine Grünstärke von 6895 kPa [1 psi] bis 517.1 kPa [75 psi] wie durch den WPSTM-Test C-1221 nach dem Härten für einen Zeitraum von 1 Minute bis 60 Minuten hat.

**2.** Dichtmittelzusammensetzung nach Anspruch 1, wobei der erste und zweite Bestandteil (A; B) ferner aufweisen (f) einen Verstärkungsfüllstoff ausgewählt aus der Gruppe bestehend aus gemahlenem Calciumcarbonat, gefälltem Calciumcarbonat, kolloidalem Calciumcarbonat, Calciumcarbonat, das mit Stearinverbindungen oder Stearinsäure behandelt wurde; pyrogenem Siliziumdioxid, gefälltem Siliziumdioxid, Silikagelen, dehydrophobierten Siliziumdioxiden, hydrophilen Silikagelen; zerstoßenem Quarz, gemahlenem Quarz, Aluminiumoxid, Aluminiumhydroxid, Titanhydroxid, Ton, Kaolin, Bentonit - Montmorillonit, Kieselerde, Eisenoxid, Industrieruß und Graphit und Mischungen dieser in einer Menge von 1 Gew.-% bis 80 Gew.-% der Gesamtzusammensetzung.

3. Dichtmittelzusammensetzung nach Anspruch 1 oder Anspruch 2, wobei dieser erste Bestandteil (A) ferner ein nicht-ionisches Tensid ausgewählt aus der Gruppe von Tensiden bestehend aus Polyethylenglykol, Polypropylenglykol, ethoxyliertem Rizinusöl, Oleinsäureethyoxylat, Alkylphenolethoxylaten, Copolymeren von Ethylenoxid und Polypropylenoxid und Copolymeren von Silikonen und Polyethern, Copolymeren von Silikonen und Copolymeren von Ethylenoxid und Propylenoxid und Mischungen dieser in einer Menge von 0,1 Gew.-% bis 10 Gew.-% der Gesamtzusammensetzung aufweist.

4. Dichtmittelzusammensetzung nach Anspruch 3, wobei das nicht-ionische Tensid ausgewählt ist aus der Gruppe von Tensiden bestehend aus Copolymeren von Ethylenoxid und Propylenoxid, Copolymeren von Silikonen und Polyethern, Copolymeren von Silikonen und Copolymeren von Ethylenoxid und Propylenoxid und Mischungen dieser.

5. Dichtmittelzusammensetzung nach Anspruch 4, wobei die Menge des Silanolterminierten Diorganopolysiloxans, Bestandteil (a) mengenmäßig in einem Bereich von 35 Gew.-% bis 45 Gew.-% der Gesamtzusammensetzung liegt.

6. Dichtmittelzusammensetzung nach Anspruch 5, wobei die Menge des Alkylterminierten Diorganopolysiloxans, Bestandteil (b) mengenmäßig in einem Bereich von 8 Gew.-% bis 20 Gew.-% der Gesamtzusammensetzung liegt.

7. Dichtmittelzusammensetzung nach Anspruch 6, wobei die Menge des Alkylsilikats, Bestandteil (c) mengenmäßig in einem Bereich von 0,5 Gew.-% bis 1,5 Gew-% der Gesamtzusammensetzung liegt.

8. Dichtmittelzusammensetzung nach Anspruch 7, wobei die Menge an Kondensationskatalysator, Bestandteil (d) mengenmäßig in einem Bereich von 0,005 Gew.-% bis 0,1 Gew.-% der Gesamtzusammensetzung liegt.

9. Dichtmittelzusammensetzung nach Anspruch 8, wobei die Menge von verstärkendem Füllstoff, Bestandteil (f) in einem Bereich von 37 Gew.-% bis 49 Gew.-% der Gesamtzusammensetzung liegt.

10. Dichtmittelzusammensetzung nach Anspruch 9, wobei die Menge von Alkoxysilan-Haftvermittler, Bestandteil (e) mengenmäßig in einem Bereich von 0,5 Gew.-% bis 2 Gew.-% der Gesamtzusammensetzung liegt.

11. Herstellungsverfahren zum Herstellen von Architekturelementen mit einer Herstellungsrate von diesen Architekturelementen, wobei diese Architekturelemente eine härtbare, zweiteiligen Dichtmittelzusammensetzung wie in einem der vorstehenden Ansprüche definiert umfassen, wobei das Herstellungsverfahren diese Architekturelemente mit einer schnelleren Herstellungsrate als einem ähnlichen Herstellungsverfahren herstellt, bei dem ein Dichtmittel zum Einsatz kommt, das nach 60 Minuten eine Grünstärke von 0 psi hat.

12. Architekturelement, das die gehärtete Zusammensetzung nach einem der Ansprüche 10 aufweist und mit dieser gebildet wurde und/oder durch das Verfahren nach Anspruch 11 hergestellt wurde.

13. Architekturelement nach Anspruch 12, wobei das Architekturelement ein Fenster, eine Tür, eine Strukturverglasung oder Vorhangfassade ist.

14. Dichtmittelzusammensetzung nach einem der Ansprüche 1-10, wobei dieser erste Bestandteil (A) (a) 15 bis 60 Gew.-% des Diorganopolysiloxans aufweist, wobei das Silikonatom an jedem Ende der Polymerkette Silanol-terminiert ist; und (b) einen Füllstoff; und dieser zweite Bestandteil (B) (c) 0,3 bis 5 Gew.-% des Alkylsilikats; (d) 0,001 bis 1.0 Gew.-% des Kondensationskatalysators; (e) 0,3 bis 10 Gew.-% des Haftvermittlers aufweist, der ausgewählt ist aus der Gruppe bestehend aus N-(2-Aminoethyl)-3-aminopropyltrimethoxysilan, γ-aminopropyltrimethoxysilan, γ-aminopropyltriethoxysilan, aminopropyltrimethoxysilan, bis-y-trimethoxysilylpropyl)amin, N-Phenyl-y-aminopropyltrimethoxysilan, y-Aminopropylmethyldiethoxysilan, y-Aminopropylmethyldiethoxysilan, Methylaminpropyltrimethoxysilan, 4-Amino-3,3-dimethlybutyltrimethoxysilan, und N-Ethyl-3-Trimethoxysilyl-2-Methylpropanamin; und (f) einem Füllstoff.

**Revendications**

1. Composition d'étanchéité en deux parties durcissable, comprenant un premier composant (A) et un second composant (B) :

dans laquelle la composition d'étanchéité est une composition de silicone de vulcanisation à température ambiante en deux parties pouvant durcir en présence d'humidité ; ledit premier composant (A) comprenant :

(a) un diorganopolysiloxane en une quantité allant de 5 pour cent en poids à 80 pour cent en poids de la composition totale, dans laquelle l'atome de silicium sur chaque extrémité de chaîne polymère présente une terminaison silanol ;
(b) du diorganopolysiloxane en une quantité allant de 5 pour cent en poids à 35 pour cent en poids de la composition totale, dans laquelle l'atome de silicium sur chaque extrémité de chaîne polymère présente une terminaison alkyle ;

ledit second composant (B) comprenant :

(b) du diorganopolysiloxane en une quantité allant de 5 pour cent en poids à 35 pour cent en poids de la composition totale, dans laquelle l'atome de silicium sur chaque extrémité de chaîne polymère présente une terminaison alkyle ;
(c) de l'alkylsilicate en une quantité allant de 0,1 pour cent en poids à 10 pourcent en poids de la composition totale ;
(d) un catalyseur de condensation en une quantité allant de 0,001 pour cent en poids à 1 pour cent en poids de la composition totale, et
(e) un promoteur d'adhésion alcoxysilane en une quantité allant de 0,1 pour cent en poids à 20 pour cent en poids de la composition totale ;

dans laquelle le rapport en poids du premier composant (A) au second composant (B) est approximativement de 13 à 1, et
dans laquelle ladite composition d'étanchéité présente une résistance en vert allant de 6,895 kPa [1 psi] à 517,1 kPa [75 psi] telle que mesurée par le test WPSTM C-1221 après durcissement sur une période de temps de 1 minute à 60 minutes.

2. Composition d'étanchéité selon la revendication 1, dans laquelle lesdits premier et second composants (A; B) comprennent en outre (f) une charge renforçante sélectionnée parmi le groupe consistant en du carbonate de calcium moulu, du carbonate de calcium précipité, du carbonate de calcium colloïdal, du carbonate de calcium traité avec des composés stéarate ou acide stéarique ; de la silice pyrogénée, de la silice précipitée, des gels de silice, des silices ayant subi un traitement hydrophobe, des gels de silice hydrophiles ; du quartz concassé ; du quartz moulu, de l'alumine, de l'hydroxyde d'aluminium, de l'hydroxyde de titane, de l'argile, du kaolin, de la bentonite montmorillonite, de la terre de diatomées, de l'oxyde de fer, du noir de carbone et du graphite, et des mélanges de ceux-ci en une quantité allant de 1 pour cent en poids à 80 pour cent en poids de la composition totale.

3. Composition d'étanchéité selon la revendication 1 ou 2, dans laquelle ledit premier composant (A) comprend en outre un surfactant non ionique sélectionné parmi le groupe de surfactants consistant en le polyéthylène glycol, polypropylène glycol, l'huile de ricin éthoxylée, l'acide oléique éthoxylé, des alkylphénols éthoxylés, des copolymères d'oxyde d'éthylène et d'oxyde de propylène et des copolymères de silicones et de polyéthers, des copolymères de silicones et des copolymères d'oxyde d'éthylène et d'oxyde de propylène, et des mélanges de ceux-ci en une quantité allant de 0,1 pour cent en poids à 10 pour cent en poids de la composition totale.

4. Composition d'étanchéité selon la revendication 3, comprenant en outre le surfactant non ionique sélectionné parmi le groupe de surfactants consistant en des copolymères d'oxyde d'éthylène et d'oxyde de propylène, des copolymères de silicones et de polyéthers, des copolymères de silicones et des copolymères d'oxyde d'éthylène et d'oxyde de propylène, et des mélanges de ceux-ci.

5. Composition d'étanchéité selon la revendication 4, dans laquelle la quantité du diorganopolysiloxane à terminaison silanol, composant (a), est comprise dans une plage en quantité allant de 35 pour cent en poids à 45 pour cent en poids de la composition totale.

6. Composition d'étanchéité selon la revendication 5, dans laquelle la quantité du diorganopolysiloxane à terminaison alkyle, composant (b), est comprise dans une plage en quantité allant de 8 pour cent en poids à 20 pour cent en poids de la composition totale.

7. Composition d'étanchéité selon la revendication 6, dans laquelle la quantité de l'alkylsilicate, composant (c), est comprise dans une plage en quantité allant de 0,5 pour cent en poids à 1,5 pour cent en poids de la composition totale.

8. Composition d'étanchéité selon la revendication 7, dans laquelle la quantité de catalyseur de condensation, composant (d), est comprise dans une plage en quantité allant de 0,005 pour cent en poids à 0,1 pour cent en poids de la composition totale.

9. Composition d'étanchéité selon la revendication 8, dans laquelle la quantité de charge renforçante, composant (f), est comprise dans une plage en quantité allant de 37 pour cent en poids à 49 pour cent en poids de la composition totale.

10. Composition d'étanchéité selon la revendication 9, dans laquelle la quantité du promoteur d'adhésion alcoxysilane, composant (e), est comprise dans une plage en quantité allant de 0,5 pour cent en poids à 2 pour cent en poids de la composition totale.

11. Procédé de fabrication destiné à fabriquer des éléments architecturaux présentant une cadence de fabrication desdits éléments architecturaux, lesdits éléments architecturaux comprenant une composition d'étanchéité en deux parties durcissable selon l'une quelconque des revendications précédentes, dans lequel ledit procédé de fabrication produit lesdits éléments architecturaux à une cadence de fabrication plus rapide qu'un procédé de fabrication similaire grâce à un matériau d'étanchéité présentant une résistance en vert de 0 psi après 60 minutes.

12. Elément architectural comprenant la composition durcie selon l'une quelconque des revendications 1 à 10, et formé avec celle-ci, et/ou fabriqué par le procédé selon la revendication 11.

13. Elément architectural selon la revendication 12, dans lequel ledit élément architectural est une fenêtre, une porte, un verre structurel, ou un mur rideau.

14. Composition d'étanchéité selon l'une quelconque des revendications 1 à 10, dans laquelle ledit premier composant (A) comprend (a) de 15 à 60 % en poids du diorganopolysiloxane, dans laquelle l'atome de silicium sur chaque extrémité de chaîne polymère présente une terminaison silanol, et (b) une charge, et ledit second composant (B) comprend (c) de 0,3 à 5,0 % en poids de l'alkylsilicate ; (d) de 0,001 à 1,0 % en poids du catalyseur de condensation ; (e) de 0,3 à 10 % en poids du promoteur d'adhésion sélectionné parmi le groupe consistant en du N-2-aminoéthyl-3-aminopropyltriéthoxysilane, du y-aminopropyltriéthoxysilane, du y-aminopropyltriméthoxysilane, de l'aminopropyltriméthoxysilane, du bis-y-triméthoxysilylpropyl)amine, du N-phényl-y-aminopropyltriméthoxysilane, du y-aminopropylméthyldiéthoxysilane, du y-aminopropylméthyldiéthoxysilane, du méthylaminopropyltriméthoxysilane, du 4-amino-3,3-diméthylbutyltriméthoxysilane, et une N-éthyl-3-triméthoxysilyl-2-méthylpropanamine, et (f) une charge.

**EP 1 723 201 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5969057 A
- EP 0861876 A
- US 5213899 A
- US 4554338 A
- US 4956436 A
- US 5489479 A
- US 5744703 A